# EUROPÄISCHE PATENTSCHRIFT

(11) **EP 4 051 530 B1**
(45) Veröffentlichungstag und Bekanntmachung des Hinweises auf die Patenterteilung: **10.05.2023**
(21) Anmeldenummer: 20799654.7
(22) Anmeldetag: 26.10.2020
(51) Int. Cl.: B60N 2/225

(54) **BESCHLAG FÜR EINEN FAHRZEUGSITZ**
FITTING FOR A VEHICLE SEAT
FERRURE POUR UN SIÈGE DE VÉHICULE

(30) Priorität: 31.10.2019 DE 102019129530; 21.08.2020 DE 102020121921
(43) Veröffentlichungstag der Anmeldung: 07.09.2022
(73) Patentinhaber: KEIPER Seating Mechanisms Co., Ltd., Shanghai, 201315 (CN)
(72) Erfinder: ALBERT, Kirubaharan, 51399 Burscheid (DE); SCHOLZ, Grit, 42897 Remscheid (DE); HUEBNER, Daniel, 51371 Leverkusen (DE); HENKEL, Dieter, 42897 Remscheid (DE); PARAMASIVAM, Balaji, 51379 Leverkusen (DE); ROCK, Arkadius, 42719 Solingen (DE); SCHUELER, Rolf, 42579 Heiligenhaus (DE); YASEN, Mothanna, 42929 Wermelskirchen (DE); DILL, Thomas, 67699 Heiligenmoschel (DE); WOLF, Christian, 67811 Dielkirchen (DE)
(74) Vertreter: Kutzenberger Wolff & Partner
(86) Internationale Anmeldenummer: PCT/EP2020/079986
(87) Internationale Veröffentlichungsnummer: WO 2021/083818

(56) Entgegenhaltungen:
- EP-A1- 2 982 482
- EP-A1- 2 982 482
- WO-A1-2020/229359
- DE-A1- 1 555 711
- DE-B2- 1 555 711
- US-A1- 2014 346 832

## Beschreibung

Die Erfindung betrifft einen Beschlag für einen Fahrzeugsitz, insbesondere Lehneneinsteller, aufweisend ein erstes Hohlrad mit einer ersten Hohlradverzahnung, ein relativ zu dem ersten Hohlrad um eine Achse drehbar gelagertes zweites Hohlrad mit einer zweiten Hohlradverzahnung und wenigstens ein auf einem Planetenträger exzentrisch zur Achse drehbar gelagertes Planetenrad, welches mit der ersten Hohlradverzahnung und der zweiten Hohlradverzahnung in Zahneingriff ist, wobei durch Drehung des Planetenträgers um die Achse das wenigstens eine Planetenrad in der ersten Hohlradverzahnung und in der zweiten Hohlradverzahnung abwälzbar ist, wodurch das erstes Hohlrad und das zweite Hohlrad relativ zueinander um die Achse drehbar sind. Die Erfindung betrifft zudem einen Fahrzeugsitz.

### Stand der Technik

Aus der DE 103 27 090 A1 ist Gelenkbeschlag für eine Verstellvorrichtung eines Kraftfahrzeugsitzes bekannt, mit einem ersten Gelenkarm, der mit einem ersten innenverzahnten Außenrad verbunden ist, mit einem zweiten Gelenkarm, der mit einem zweiten innenverzahnten Außenrad verbunden ist und relativ zum ersten Gelenkarm um eine Gelenkachse verstellbar ist, mit mindestens zwei Planetenrädern, die jeweils sowohl mit dem ersten Außenrad als auch mit dem zweiten Außenrad in Eingriff sind und die jeweils um eine Planetenradachse drehbar angeordnet sind, und mit einem antreibenden Ritzel, das mit den mindestens zwei Planetenrädern in Eingriff ist. Es ist ein Träger vorgesehen, der um die Gelenkachse drehbar angeordnet ist. Ein erstes Planetenrad von den mindestens zwei Planetenrädern ist an diesem Träger drehbar und relativ zum Träger bewegbar angeordnet. Es ist eine Ausgleichsvorrichtung vorgesehen, die zwischen dem Träger und dem ersten Planetenrad angeordnet ist und die ein elastisches Mittel aufweist, das das erste Planetenrad in Eingriff mit den beiden Außenrädern vorbelastet.

Aus der DE 10 2014 208 852 B4 ist ein Doppelbeschlag für einen Fahrzeugsitz bekannt, mit zwei miteinander wirkverbunden Beschlägen, wobei jeder der beiden Beschläge ein erstes Beschlagteil und ein zweites Beschlagteil aufweist, die relativ zueinander um eine Achse taumelnd verdrehbar sind, wobei das erste Beschlagteil und das zweite Beschlagteil miteinander in Getriebeverbindung stehen. Bei einer Verwendung des Doppelbeschlags zur Lehnenneigungseinstellung ist die Lehnenbewegung nicht konzentrisch zu einem sitzfesten Unterteil, sondern entsprechend taumelnd.

Aus der DE 15 55 711 A1 ist ein Beschlag bekannt, bei welchem die Neigungsverstellung der Rückenlehne zur Sitzfläche stufenlos veränderbar ist.

Aus der US 2014/346832 A1 ist ein Beschlagsystem bekannt mit einem Getriebemodul, welches als Differentialgetriebe ausgebildet und konzentrisch zu einer Achse angeordnet ist und die Drehung der Beschlagteile und die Drehung der Übertragungsstange voneinander entkoppelt.

### Aufgabe

Der Erfindung liegt die Aufgabe zu Grunde, einen Beschlag, insbesondere Lehneneinsteller, eingangs genannter Art zu verbessern. Insbesondere soll ein hochfester Beschlag bereitgestellt werden, der sich kontinuierlich, das heißt stufenlos, einstellen lässt und dadurch motorisch angetrieben werden kann. Insbesondere soll der Beschlag eine drehende, nicht taumelnde Verstellung ermöglichen. Insbesondere soll der Beschlag zur Verwendung in elektrifizierten Rücksitzlehnen geeignet sein, die einen großen, insbesondere elektrisch per Fernbedienung oder Handy-App einstellbaren, Verstellbereich (vorzugsweise von horizontal vorne nach horizontal hinten) aufweisen und höhere Einstellgeschwindigkeiten als Komforteinstellungen benötigen.

Der Erfindung liegt zudem die Aufgabe zu Grunde, einen entsprechenden Fahrzeugsitz bereitzustellen.

### Lösung

Diese Aufgabe wird erfindungsgemäß gelöst, durch einen Beschlag für einen Fahrzeugsitz, insbesondere Lehneneinsteller, aufweisend ein erstes Hohlrad mit einer ersten Hohlradverzahnung, ein relativ zu dem ersten Hohlrad um eine Achse drehbar gelagertes zweites Hohlrad mit einer zweiten Hohlradverzahnung und wenigstens ein auf einem Planetenträger exzentrisch zur Achse drehbar gelagertes Planetenrad (Laufplanet), welches mit der ersten Hohlradverzahnung und der zweiten Hohlradverzahnung in Zahneingriff ist, wobei durch Drehung des Planetenträgers um die Achse das wenigstens eine Planetenrad in der ersten Hohlradverzahnung und in der zweiten Hohlradverzahnung abwälzbar ist, wodurch das erste Hohlrad und das zweite Hohlrad relativ zueinander um die Achse drehbar sind, wobei wenigstens ein um eine Sperrplanetenrad-Drehachse drehbares Sperrplanetenrad mit der ersten Hohlradverzahnung und mit der zweiten Hohlradverzahnung in einem dauerhaften Zahneingriff ist, und ein Abstand zwischen der Sperrplanetenrad-Drehachse und der Achse derart veränderbar ist, dass das wenigstens eine Sperrplanetenrad wahlweise zwischen einem verriegelnden Zahneingriff und einem nicht verriegelnden Zahneingriff mit der ersten Hohlradverzahnung und/oder der zweiten Hohlradverzahnung überführbar ist.

Dadurch, dass wenigstens ein um eine Sperrplanetenrad-Drehachse drehbares Sperrplanetenrad mit der ersten Hohlradverzahnung und mit der zweiten Hohlradverzahnung in einem dauerhaften Zahneingriff ist, und ein Abstand zwischen der Sperrplanetenrad-Drehachse und der Achse derart veränderbar ist, dass das wenigstens eine Sperrplanetenrad wahlweise zwischen einem verriegelnden Zahneingriff und einem nicht verriegelnden Zahneingriff mit der ersten Hohlradverzahnung und/oder der zweiten Hohlradverzahnung überführbar ist, kann der Beschlag mittels des wenigstens einen Sperrplanetenrads entriegelt und verriegelt werden, wobei die eigentliche Einstellfunktion durch die Planetenräder erfolgt.

Der Beschlag kann mehrere Planetenräder aufweisen. Der Beschlag kann mehrere Sperrplanetenräder aufweisen. Der Beschlag kann mehrere Planetenräder und genauso viele Sperrplanetenräder aufweisen. Der Beschlag kann genau drei Planetenräder aufweisen. Der Beschlag kann genau drei Sperrplanetenräder aufweisen. Der Beschlag kann genau drei Planetenräder und genau drei Sperrplanetenräder aufweisen.

Eine Zähnezahldifferenz zwischen einer Zähnezahl der ersten Hohlradverzahnung und einer Zähnezahl der zweiten Hohlradverzahnung kann der Anzahl der Planetenräder oder einem Vielfachen davon entsprechen. Eine Zähnezahldifferenz zwischen einer Zähnezahl der ersten Hohlradverzahnung und einer Zähnezahl der zweiten Hohlradverzahnung beträgt vorzugsweise drei oder ein Vielfaches von drei.

Das wenigstens eine Sperrplanetenrad kann einteilig mit einer axial durchgehenden Verzahnung sein. Vorzugsweise ist dann die Zähnezahldifferenz zwischen der ersten Hohlradverzahnung und der zweiten Hohlradverzahnung doppelt so groß wie die Anzahl der Planetenräder (Laufplaneten).

Vorzugsweise kann das wenigstens eine Sperrplanetenrad ein erstes Zahnrad und ein zweites Zahnrad aufweisen, wobei das erste Zahnrad und das zweite Zahnrad axial nebeneinander angeordnet und drehfest miteinander verbunden sind. Vorzugsweise ist dann die Zähnezahldifferenz zwischen der ersten Hohlradverzahnung und der zweiten Hohlradverzahnung genauso groß wie die Anzahl der Planetenräder. Das erste Zahnrad kann mit der ersten Hohlradverzahnung und das zweite Zahnrad mit der zweiten Hohlradverzahnung in einem dauerhaften Zahneingriff sein.

Das wenigstens eine Sperrplanetenrad kann mittels eines Steuermittels entgegen der Kraft eines Kraftspeichers aus dem verriegelnden Zahneingriff in den nicht verriegelnden Zahneingriff bewegbar sein. Das wenigstens eine Sperrplanetenrad kann durch das Steuermittel in dem verriegelnden Zahneingriff gehalten werden, insbesondere indem das Steuermittel eine Exzenterkontur aufweist.

Ein drehbar gelagerter Mitnehmer kann derart mit dem Steuermittel und dem Planetenträger zusammenwirken, dass eine Drehung des Mitnehmers aus einer Mittellage heraus zunächst eine Drehung des Steuermittels und daraus resultierend eine Überführung des wenigstens einen Sperrplanetenrads in den nicht verriegelnden Zahneingriff bewirkt, und anschließend bei weiterer Drehung des Mitnehmers eine Drehung des Planetenträgers bewirkt.

Im verriegelnden Zahneingriff des wenigstens einen Sperrplanetenrads kann eine Verzahnung des wenigstens einen Sperrplanetenrads an wenigstens zwei Kontaktstellen, vorzugsweise an mehr als zwei Kontaktstellen, vorzugsweise an vier Kontaktstellen, mit der ersten Hohlradverzahnung und/oder an wenigstens zwei Kontaktstellen, vorzugsweise an mehr als zwei Kontaktstellen, vorzugsweise an vier Kontaktstellen, mit der zweiten Hohlradverzahnung im Kontakt sein. Durch Verkleinerung des Abstands zwischen der Sperrplanetenrad-Drehachse und der Achse, insbesondere durch Überführung des wenigstens einen Sperrplanetenrads in den nicht verriegelnden Zahneingriff, kann die Anzahl der Kontaktstellen reduzierbar sein.

Die Zahnflanken der Verzahnungen des wenigstens einen Sperrplanetenrads können derart ausgelegt sein, dass im verriegelnden Zahneingriff des wenigstens einen Sperrplanetenrads weder die erste Hohlradverzahnung noch die zweite Hohlradverzahnung eine Kraftkomponente in Richtung der Achse auf das Sperrplanetenrad ausüben können.

Die Aufgabe wird zudem gelöst durch einen Fahrzeugsitz mit einem Sitzteil, einer Rückenlehne und wenigstens einem erfindungsgemäßen Beschlag. Der Beschlag dient vorzugsweise zur Einstellung eines Neigungswinkels zwischen dem Sitzteil und der Rückenlehne, kann jedoch andere Einstellfunktionen ermöglichen, wie beispielsweise eine Sitzhöheneinstellung und eine Sitzkissenneigungseinstellung.

Zusammenfassend und mit anderen Worten besteht die Kernidee der Erfindung in einer Trennung der Gesamtaufgabe "exzellente Einstellfunktion bei gleichzeitig erhöhter Lastaufnahme" in unterschiedliche Teilaufgaben bzw. Wirkprinzipien. Der erfindungsgemäße Beschlag erfüllt beide Teilaufgaben ("exzellente Einstellfunktion" und "hohe Lastaufnahme") optimal. Es ist ein Umlaufrädergetriebe, insbesondere ein Wolfromgetriebe ohne Sonnenrad, vorgestellt, mit einem sitzteilfesten Hohlrad und einem lehnenfesten Hohlrad mit unterschiedlichen Zähnezahlen. Eine Zähnezahldifferenz entspricht vorzugsweise der Anzahl der Planeten oder einem Vielfachen davon. Ein Planetenträger lagert z.B. drei Laufplaneten (Planetenräder) und drei Sperrplaneten (Sperrplanetenräder), wobei die Sperrplanetenräder radial verschiebbar sind. Die Begriffe Planetenrad und Laufplanet werden synonym verwendet. Für die Funktion "exzellente Einstellfunktion" sind die Planetenräder vorgesehen, die die Verstellkräfte aufnehmen und die Verstellfunktion gewährleisten. Dazu weisen die Planetenräder eine optimale Verzahnung und Lagerung für einen guten Lauf und einen guten Wirkungsgrad auf. Die Planetenräder sind im Planetenträger mit einem optimalen Laufachsabstand gelagert. Dieser würde aber bewirken, dass das Getriebe in Sperrzustand ein zu großes Spiel aufweist. Deshalb wurden erfindungsgemäß Sperrplanetenräder vorgesehen. Im Laufzustand werden diese von einer Kulisse zurückgehalten und im Sperrzustand radial federbelastet nach außen in die Hohlradverzahnung(en) gedrückt. Dort sperren sie durch eine speziell "schlechte" Verzahnung, die ein Abwälzen durch Zahnkontakt an mehreren Stellen verhindert, so dass die Planetenräder blockiert sind.

Um ein radiales Zurückweichen unter Last zu verhindern, wird eine beim Verstellen außer Kontakt bringbare Exzenterkontur, beispielsweise in Form einer Steuerkulisse, verwendet. Diese Exzenterkontur kann im gesperrten Zustand eine tangential zentrisch unter dem Sperrplanet liegende Kontur aufweisen und damit direkt mit einem Mitnehmer verbunden sein. Die Exzenterkontur kann vorzugsweise in beiden Motordrehrichtungen unter dem Sperrplanetenrad wegbewegt werden. Alternativ kann die Exzenterkontur zur Spielfreistellung eine Spannkontur aufweisen. Beim Verstellen des Beschlags wird zunächst vom Mitnehmer die Exzenterkontur angetrieben, wodurch die Sperrplanetenachsen freigegeben werden. Ein Steuermittel, insbesondere eine Kulissenscheibe, kann die Sperrplanetenräder radial nach innen in einen Laufachsabstand bringen. Anschließend wird der Planetenträger angetrieben und die Verstellung des Beschlags (Verdrehung der Hohlräder zueinander) beginnt. Für die gewünschte Übersetzung können die Planetenräder axial in zwei Zahnräder geteilt sein, die drehfest miteinander verbunden sind. Die Planetenräder können in zwei Hohlradverzahnungen eingreifen, die beispielsweise eine Zähnezahldifferenz von drei statt sechs haben.

Bei einer bevorzugten Ausführungsform wird eine Selbsthemmung bzw. Blockierung der Sperrplanetenräder durch eine spezielle Zahnspitzengeometrie erreicht, wobei nach Einfall der Sperrplanetenräder die Zahnflanken einen Nullgrad-Winkel zur radialen Bewegungsrichtung der Sperrplanetenräder haben, und deshalb keine austreibende Kraft erfahren. Auf ein Sperren der Sperrplanetenräder, beispielsweise mit einem Exzenter, kann dann verzichtet werden.

Ein erfindungsgemäßer Beschlag löst die eingangs beschriebene Aufgabe. Mit der Erfindung ist zudem ein Beschlag bereitgestellt, der insbesondere auch bei autonom fahrenden Fahrzeugen eingesetzt werden kann, bei denen ein erweiterter Einstellbereich der Fahrzeugsitze gefordert wird, um den Komfort für den nicht mehr ständig lenkenden Insassen zu erhöhen. Der Beschlag kann vorteilhaft in Fahrzeugsitzen verwendet werden, bei denen das Gurtsystem komplett mit dem Fahrzeugsitz verfährt, um auch bei weit nach hinten längseingestellter Sitzposition oder flach eingestellten Rückenlehnen einen Schultergurt nahe an einem Insassen anliegen zu lassen. Derartige Gurtsysteme, deren Schultergurt somit nicht mehr karosseriefest an der B-Säule, sondern im oberen Bereich der Sitzlehne befestigt ist, führen zu signifikant höheren Lasten im Beschlag. Ein erfindungsgemäßer Beschlag kann diesen Lasten standhalten und benötigt dennoch wenig Bauraum und weist ein geringes Gewicht auf.

### Figuren und Ausführungsformen der Erfindung

Im Folgenden ist die Erfindung anhand eines in den Figuren dargestellten vorteilhaften Ausführungsbeispiels und einer Abwandlung dieses Ausführungsbeispiels näher erläutert. Die Erfindung ist jedoch nicht auf dieses Ausführungsbeispiel und dessen Abwandlung beschränkt. Es zeigen:

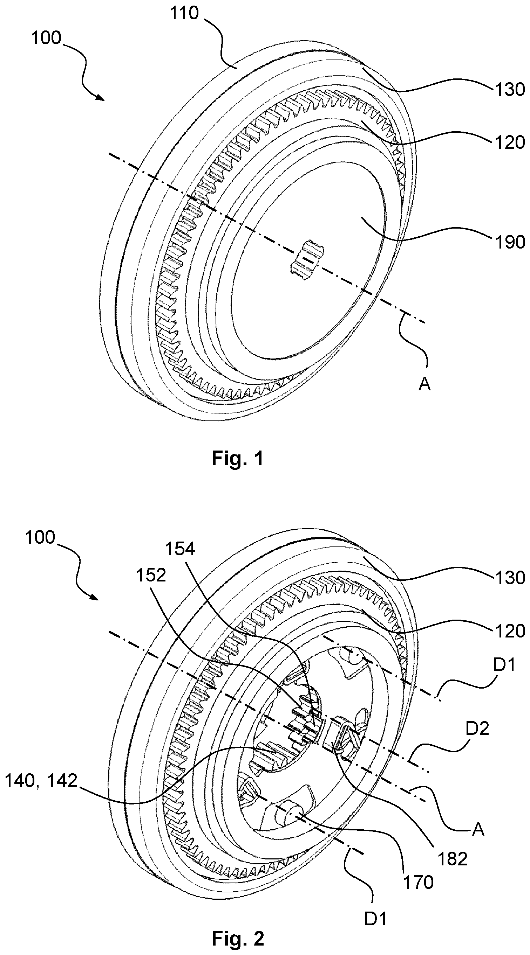

- Fig. 1:: eine perspektivische Ansicht eines erfindungsgemäßen Beschlags,
- Fig. 2:: eine perspektivische Ansicht des Beschlags aus Fig. 1, wobei ein Mitnehmer entfernt ist,

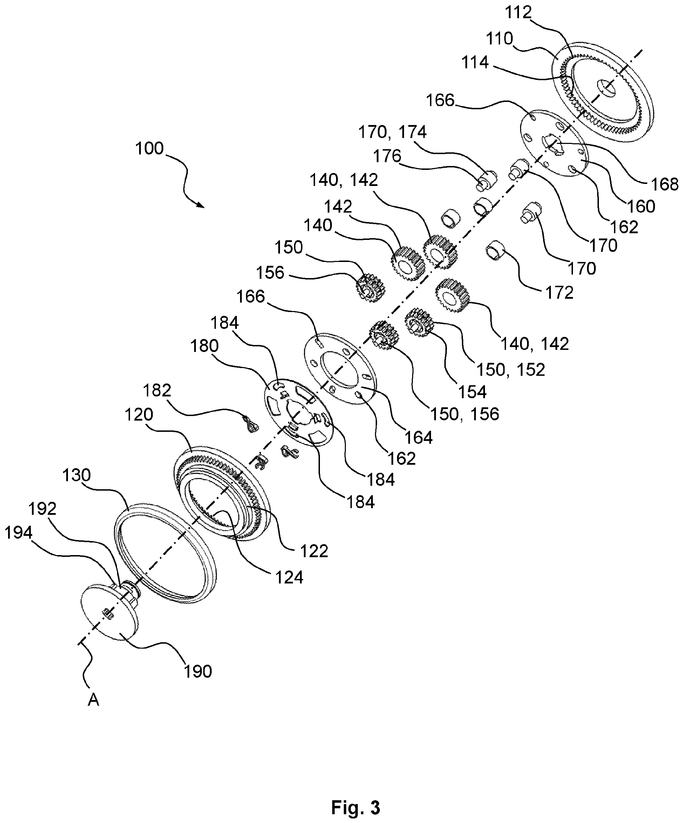

- Fig. 3:: eine Explosionsdarstellung des Beschlags aus Fig. 1,

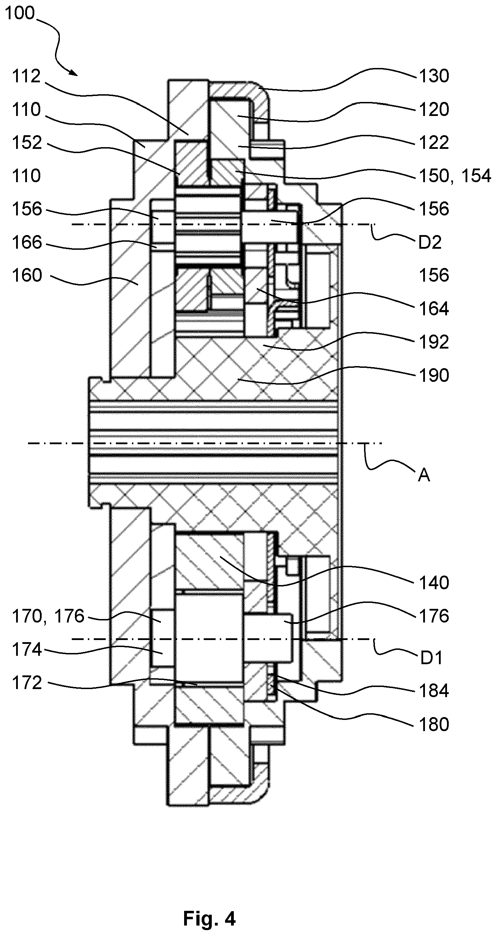

- Fig. 4:: einen Schnitt durch den Beschlag aus Fig. 1,

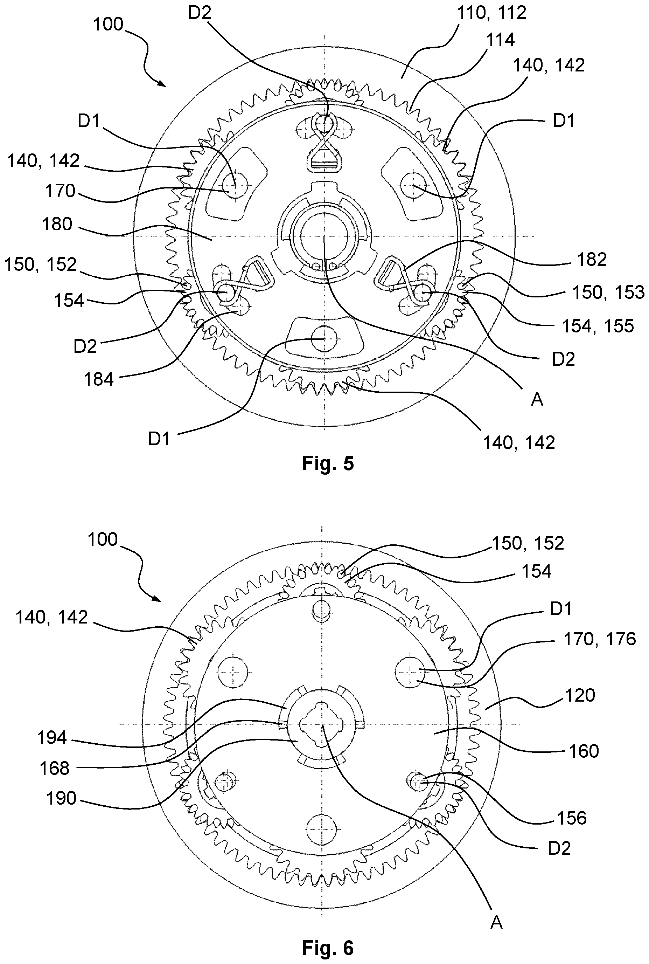

- Fig. 5:: eine Draufsicht des Beschlags aus Fig. 1, wobei der Mitnehmer, ein Umklammerungsring und ein zweites Beschlagteil entfernt sind,
- Fig. 6:: eine Rückansicht des Beschlags aus Fig. 1 mit Darstellung einer Längsführung der Sperrplaneten in einem Planetenträger sowie einer Darstellung von Mitnehmernocken eines Mitnehmers in einem Eingriff mit dem Planetenträger,
- Fig. 7:: eine Fig. 5 entsprechende Ansicht, wobei zudem ein Planetenträgerflansch entfernt ist,
- Fig. 8:: ausschnittsweise eine Verzahnung eines Sperrplanetenrads in einem verriegelnden Zahneingriff (Sperrzustand) mit einer Verzahnung eines ersten Beschlagteils,
- Fig. 9:: ausschnittsweise eine Verzahnung eines Sperrplanetenrads in einem nicht verriegelnden Zahneingriff (Laufzustand) mit einer Hohlradverzahnung eines ersten Beschlagteils einer Abwandlung des erfindungsgemäßen Beschlags,
- Fig. 10:: ausschnittsweise die Verzahnung des Sperrplanetenrads in einem verriegelnden Zahneingriff (Sperrzustand) mit der Hohlradverzahnung des ersten Beschlagteils der Abwandlung des erfindungsgemäßen Beschlags, und
- Fig. 11:: schematisch und perspektivisch einen Fahrzeugsitz mit einem erfindungsgemäßen Beschlag.

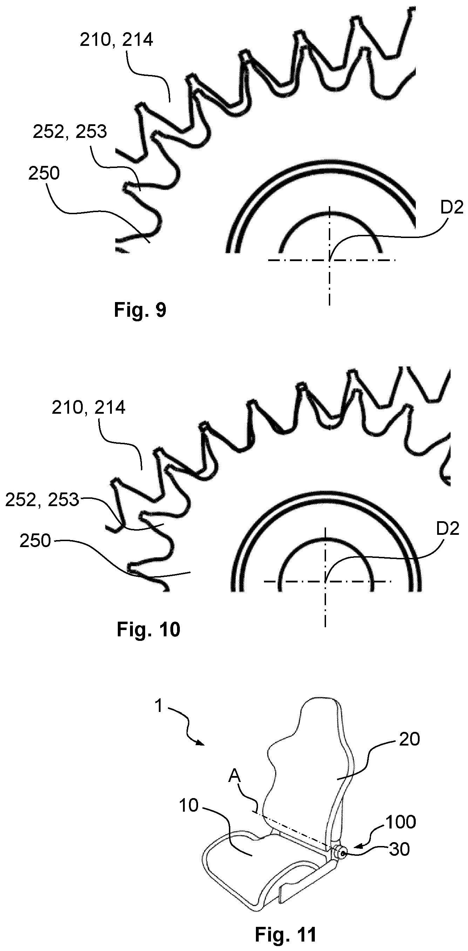

Ein in Figur 11 schematisch dargestellter Fahrzeugsitz 1 für ein Kraftfahrzeug weist ein Sitzteil 10 und eine relativ zu dem Sitzteil 10 in ihrer Neigung einstellbare Rückenlehne 20 auf. Zur Neigungseinstellung der Rückenlehne 20 wird manuell, beispielsweise mittels eines Handrades, oder motorisch, beispielsweise mittels eines Elektromotors, eine Antriebswelle 30 gedreht, welche horizontal im Übergangsbereich zwischen dem Sitzteil 10 und Rückenlehne 20 angeordnet ist. Auf beiden Seiten des Fahrzeugsitzes 1 greift die Antriebswelle 30 drehfest in jeweils einen Beschlag 100, insbesondere einen Mitnehmer 190 des jeweiligen Beschlags 100 ein. Dabei kann in Umfangsrichtung der Antriebswelle 30 ein kleiner Freilaufwinkel zwischen der Antriebswelle 30 und einem der beiden Beschläge 100 zum Toleranzausgleich zwischen den beiden Beschlägen 100 vorgesehen sein.

Die Antriebswelle 30 ist um eine Achse A drehbar. Die Achse A definiert eine Zylinderkoordinatensystem, das für die nachfolgend verwendeten Richtungsangaben herangezogen wird. So beziehen sich insbesondere die Begriffe axial, radial und Umfangsrichtung auf diese Achse A.

Mittels der beiden Beschläge 100 ist die Rückenlehne 20 um die Achse A einstellbar, das heißt, in einem entriegelten Zustand der Beschläge 100 schwenkbar und in einem verriegelten Zustand der Beschläge nicht schwenkbar. Die beiden Beschläge 100 sind vorzugsweise gleich aufgebaut, weshalb nachfolgend nur einer der beiden Beschläge 100 beschrieben ist.

In einer Abwandlung des Ausführungsbeispiels weist der Fahrzeugsitz nur genau einen Beschlag 100 auf, der auf einer von zwei Sitzseiten angeordnet ist. Auf einer gegenüberliegenden Sitzseite weist der Fahrzeugsitz 1 dann ein Drehlager mit einer Achse auf, die mit der Achse A des genau einen Beschlags 100 fluchtet. In einer Abwandlung des Ausführungsbeispiels weist ein als Rücksitz einer zweiten oder dritten Sitzreihe ausgelegter Fahrzeugsitz mehr als zwei Beschläge 100 auf. Die mehr als zwei Beschläge 100 können mit einem oder mehreren Drehlagern kombiniert sein. Eine Rückenlehne des Fahrzeugsitz kann einen, zwei oder drei Sitzplätze abdecken und wahlweise eine Gurtintegration aufweisen.

Der Beschlag 100 weist ein erstes Beschlagteil 110 und ein zweites Beschlagteil 120 auf, welche in einem entriegelten Zustand des Beschlags 100 relativ zueinander um die Achse A verdrehbar sind. Mit der Montage des Beschlags 100 ist das erste Beschlagteil 110 beispielsweise fest mit einer Struktur der Rückenlehne 20 des Fahrzeugsitzes 1 verbunden, also lehnenfest. Das zweite Beschlagteil 120 ist dann fest mit der Struktur des Sitzteils 10 verbunden, also sitzteilfest. Die Zuordnungen der Beschlagteile 110, 120 können jedoch auch vertauscht sein, d.h. das erste Beschlagteil 110 wäre dann sitzteilfest und das zweite Beschlagteil 120 lehnenfest. Der Beschlag 100 liegt im Kraftfluss zwischen der Rückenlehne 20 und dem Sitzteil 10, weshalb die beide Beschlagteile 110, 120 vorzugsweise aus Metall gefertigt sind, vorzugsweise aus Stahl.

Das erste Beschlagteil 110 weist ein erstes Hohlrad 112 mit einer ersten Hohlradverzahnung 114 auf. Das zweite Beschlagteil 120 weist ein zweites Hohlrad 122 mit einer zweiten Hohlradverzahnung 124 auf. Eine Zähnezahldifferenz zwischen einer Zähnezahl der ersten Hohlradverzahnung 114 und einer Zähnezahl der zweiten Hohlradverzahnung 124 beträgt vorliegend drei. Aufgrund der Zähnezahldifferenz von drei weist der Beschlag 100 genau drei Stellen auf, an denen jeweils ein Zahn der ersten Hohlradverzahnung 114 und ein Zahn der zweiten Hohlradverzahnung 124 in Umfangsrichtung betrachtet exakt miteinander fluchten. Die jeweils dazwischen liegenden Zähne sind aufgrund der Zähnezahldifferenz in Umfangsrichtung zueinander verschoben, wobei die Verschiebung in der Mitte zwischen zwei jeweils fluchtenden Zähnepaaren am größten ist.

Die beiden Beschlagteile 110, 120 lassen sich jeweils näherungsweise in eine kreisrunde Scheibenform einbeschreiben, die jeweils Geometrien, insbesondere Absätze, im Bereich ihrer Außenflächen zur Befestigung an dem Sitzteil 10 bzw. an der Rückenlehne 20 aufweisen. Zur Aufnahme der axial wirkenden Kräfte, also zum Zusammenhalt der Beschlagteile 110, 120, ist ein Umklammerungsring 130 vorgesehen. Der vorzugsweise metallische Umklammerungsring 130 weist einen hohlzylindrischen Abschnitt auf, der einerseits fest mit einem äußeren Rand des ersten Beschlagteils 110 verbunden, vorliegend verschweißt, ist. Mittels eines radial nach innen weisenden Randes übergreift der Umklammerungsring 130 andererseits das relativ zu dem ersten Beschlagteil 110 und dem Umklammerungsring 130 bewegliche zweite Beschlagteil 120 in einem radial äußeren Bereich des zweiten Beschlagteils 120, ohne die Relativdrehung der beiden Beschlagteile 110, 120 zu behindern. Die beiden Beschlagteile 110, 120 bilden zusammen mit dem Umklammerungsring 130 eine scheibenförmige Einheit.

Der Beschlag 100 ist als ein Planetengetriebe ausgebildet. Der Beschlag 100 weist drei Planetenräder 140 mit jeweils einer Planetenrad-Verzahnung 142 zum Einstellen des Beschlags 100, und drei Sperrplanetenräder 150 zum Feststellen (Verriegeln) des Beschlags 100 auf.

Jedes der drei Planetenräder 140 ist um jeweils eine Planetenrad-Drehachse D1 drehbar an einem gemeinsamen Planetenträger 160 gelagert. Die drei Planetenrad-Drehachsen D1 sind gleichmäßig über den Umfang verteilt, das heißt vorliegend um 120 Grad zueinander versetzt angeordnet. Die Sperrplanetenräder 150 ist um jeweils eine Sperrplanetenrad-Drehachse D2 drehbar und radial verschiebbar an dem Planetenträger 160 gelagert. Die drei Sperrplanetenrad-Drehachsen D2 sind gleichmäßig über den Umfang verteilt, das heißt vorliegend um 120 Grad zueinander versetzt angeordnet. Jeweils eines der drei Sperrplanetenräder 150 ist in Umfangsrichtung betrachtet mittig zwischen zwei Planetenrädern 140 angeordnet, so dass die Anordnung der Planetenräder 140 um 60 Grad gedreht zur Anordnung der Sperrplanetenräder 150 ist.

Die drei Planetenräder 140 sind jeweils unter Zwischenlage einer Lagerbuchse 172 drehbar auf einem von drei Lagerbolzen 170 gelagert. Jeder der drei Lagerbolzen 170 ist axial gestuft und weist axial mittig einen Aufnahmebereich 174 für eines der drei Planetenräder 140 beziehungsweise eine der drei Lagerbuchsen 172 auf. Axial neben dem Aufnahmebereich 174 weist jeder der drei Lagerbolzen 170 beidseitig einen Zapfen 176 auf. Die Durchmesser der Zapfen 176 sind kleiner als ein Durchmesser des Aufnahmebereichs 174. Jeweils ein Zapfen 176 eines jeden Lagerbolzens 170 ist in eine von drei korrespondierenden Öffnungen 162 in dem Planetenträger 160 eingesteckt, vorzugsweise eingepresst oder vernietet. Der jeweils andere Zapfen 176 eines jeden Lagerbolzens 170 ist vorliegend in eine von drei korrespondierenden Öffnungen 162 eines Planetenträgerflanschs 164 eingesteckt, vorzugsweise eingepresst. Die drei Planetenräder 140 sind somit zwischen dem Planetenträger 160 und dem Planetenträgerflansch 164 angeordnet.

Die Zapfen 176 der Planetenräder 140 bilden die drei Planetenrad-Drehachsen D1. Die Planetenrad-Drehachsen D1 sind jeweils in einem definierten, unveränderbaren Abstand s1 zur Achse A angeordnet. Dabei sind die Planetenrad-Drehachsen D1 derart angeordnet, dass die Planetenrad-Verzahnungen 142 sowohl mit der ersten Hohlradverzahnung 114 als auch mit der zweiten Hohlradverzahnung 124 in Zahneingriff, insbesondere für eine Einstellung des Beschlags 100 optimalen Zahneingriff sind. Eine Drehung des Planetenträgers 160 um die Achse A bewirkt ein Abwälzen der drei Planetenräder 140 in den beiden Hohlrädern 112, 122. Aufgrund der Zähnezahldifferenz zwischen den Hohlradverzahnungen 114, 124 erfolgt dadurch eine Relativdrehung zwischen dem ersten Hohlrad 112 und dem zweiten Hohlrad 122 und somit zwischen dem ersten Beschlagteil 110 und dem zweiten Beschlagteil 120, so dass mittels einer Drehung des Planetenträgers 160 der Beschlag mit einem Untersetzungsverhältnis einstellbar ist.

Jedes der drei Sperrplanetenräder 150 weist jeweils ein erstes Zahnrad 152 und ein zweites Zahnrad 154 auf, wobei das erste Zahnrad 152 und das zweite Zahnrad 154 axial nebeneinander angeordnet und drehfest miteinander verbunden sind. Vorzugsweise weist das erste Zahnrad 152 eine Verzahnung 153 mit der gleichen Zähnezahl wie eine Verzahnung 155 des zweiten Zahnrads 154 auf, jedoch sind die Verzahnungen 153, 155 zueinander verdreht (verschoben) angeordnet, vorzugsweise um eine halbe Zahnbreite zueinander verdreht angeordnet. In einer Abwandlung des Ausführungsbeispiels können die Zähnezahlen der Verzahnungen 153, 155 auch voneinander abweichen, beispielsweise analog der Zähnezahldifferenz der Hohlradverzahnungen 114, 124.

Das erste Zahnrad 152 ist mit der ersten Hohlradverzahnung 114 des ersten Hohlrads 112 und das zweite Zahnrad 154 mit der zweiten Hohlradverzahnung 124 des zweiten Hohlrads 122 in einem dauerhaften Zahneingriff. Die beiden Zahnräder 152, 154 sind jeweils gemeinsam um die zugeordnete Sperrplanetenrad-Drehachse D2 drehbar, wobei die Sperrplanetenrad-Drehachsen D2 begrenzt radial verschiebbar an dem Planetenträger 160 und dem Planetenträgerflansch 164 gelagert ist. Die Sperrplanetenräder 150 sind dadurch verschiebbar zwischen einem verriegelnden Zahneingriff mit den Hohlradverzahnungen 114, 124 und einen nicht verriegelnden Zahneingriff mit den Hohlradverzahnungen 114, 124 geführt.

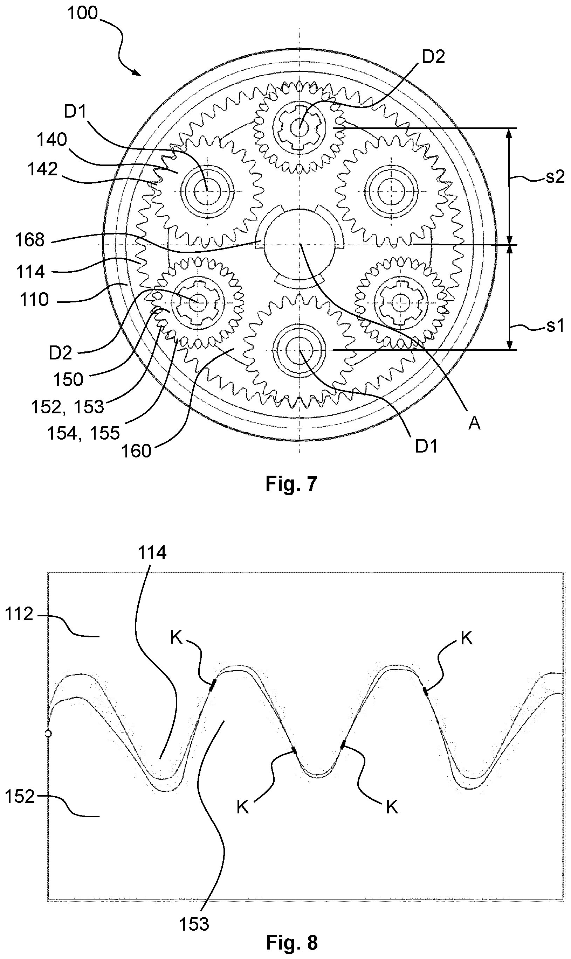

In dem verriegelnden Zahneingriff der Zahnräder 152, 154 mit den Hohlradverzahnungen 114, 124 sind die Sperrplanetenräder 150 aufgrund jeweils einer Anzahl von vier Kontaktstellen K zwischen den Verzahnungen153, 155 der Zahnräder 152, 154 und den Hohlradverzahnungen 114, 124 nicht um die Sperrplanetenrad-Drehachsen D2 drehbar, so dass kein Abwälzen der drei Sperrplanetenräder 150 in den beiden Hohlrädern 112, 122 und somit keine Relativdrehung zwischen dem ersten Hohlrad 112 und dem zweiten Hohlrad 122 erfolgen kann. Der Beschlag 100 befindet sich dadurch in einem verriegelten Zustand (Sperrzustand), in dem das erste und zweite Beschlagteil 110, 120 nicht relativ zueinander drehbar sind. Die vier Kontaktstellen K zwischen einem ersten Zahnrad 152 und der ersten Hohlradverzahnung 114 ist in Figur 8 dargestellt.

In dem nicht verriegelnden Zahneingriff der Zahnräder 152, 154 mit den Hohlradverzahnungen 114, 124 ist die Anzahl der Kontaktstellen K zwischen den Verzahnungen 153, 155 der Zahnräder 152, 154 und den Hohlradverzahnungen 114, 124 reduziert, insbesondere auf jeweils mehr als eine Kontaktstelle K reduziert. Dadurch sind die Zahnräder 152, 154 in den Hohlradverzahnungen 114, 124 abwälzbar, so dass aufgrund der Zähnezahldifferenz zwischen den Hohlradverzahnungen 114, 124 eine Relativdrehung zwischen dem ersten Hohlrad 112 und dem zweiten Hohlrad 122 erfolgen kann. Der Beschlag befindet sich dann in einem nicht verriegelten Zustand (Laufzustand).

Die Sperrplanetenräder 150 weisen jeweils beidseitig einen Lagerzapfen 156 auf. Jeweils ein Lagerzapfen 156 ist in einem von drei radial ausgerichteten Langlöchern 166 in dem Planetenträger 160 radial beweglich geführt. Der jeweils andere Lagerzapfen 156 eines jeden Sperrplanetenrads 150 ist vorliegend in einem von drei korrespondierenden Langlöchern 166 in einem Planetenträgerflansch 164 radial beweglich geführt. Die drei Sperrplanetenräder 150 sind somit zwischen dem Planetenträger 160 und dem Planetenträgerflansch 164 angeordnet.

Die Lagerzapfen 156 bilden die drei Sperrplanetenrad-Drehachsen D2, deren Abstand s2 zur Achse A jeweils mittels eines Steuermittels 180 derart veränderbar ist, dass die Sperrplanetenräder 150 wahlweise zwischen dem verriegelnden Zahneingriff und dem nicht verriegelnden Zahneingriff mit den Hohlradverzahnungen 114, 124 überführbar sind.

Das Steuermittel 180 ist vorliegend als eine Kulissenscheibe ausgebildet, auf der drei als Federelemente ausgebildete Kraftspeicher 182 angeordnet sind. Das Steuermittel 180 weist drei Steuerkulissen 184 auf, in die jeweils ein Lagerzapfen 156 eines jeden Sperrplanetenrads 150 eingreift. Das Steuermittel 180 ist relativ zu dem Planetenträger 160 um die Achse A schwenkbar. Die Steuerkulissen 184 sind vorliegend jeweils als um die Achse A gekrümmt verlaufende Langlöcher ausgebildet, die Steuerkonturen zum Zusammenwirken mit den Lagerzapfen 156 der Sperrplanetenräder 150 aufweisen.

Wenn sich die Lagerzapfen 156 in Umfangsrichtung betrachtet mittig innerhalb der Steuerkulissen 184 befinden, werden die Lagerzapfen 156 durch die Kraftspeicher 182 soweit nach radial außen gedrückt, dass die Sperrplanetenräder 150 im verriegelnden Zahneingriff mit den Hohlradverzahnungen 114, 124 sind. Optional sind die Lagerzapfen 156 nicht oder nicht nur durch die Kraftspeicher 182 radial außen gehalten, sondern (auch) durch die Steuerkulissen 184 und/oder ein zusätzliches, in den Figuren nicht dargestelltes Exzentermittel.

Durch eine Drehung des Steuermittels 180 relativ zum Planetenträger 160 ziehen die Steuerkulissen 184 die Lagerzapfen 156 entgegen der Kraft der Kraftspeicher 182 nach radial innen, wodurch die Sperrplanetenräder 150 in den nicht verriegelnden Zahneingriff überführt werden und somit der Beschlag 100 entriegelt ist.

Zum Drehen des Steuermittels 180 und einem anschließenden Drehen des Planetenträgers 160 weist der Beschlag 100 den Mitnehmer 190 auf, der, gegebenenfalls nach Durchlaufen eines Leerwinkels, drehfest mit der Antriebswelle 30 verbindbar beziehungsweise verbunden ist. Der Mitnehmer 190 ist zudem über ein Mitnehmerprofil 192, vorliegend aufweisend drei axial ausgerichtete Mitnehmernocken 194, drehfest mit dem Steuermittel 180 verbunden. Zudem greift das Mitnehmerprofil 192 mit Spiel in Umfangsrichtung in eine komplementär zum Mitnehmerprofil 192 profilierte Aufnahmeöffnung 168 des Planetenträgers 160.

Zum Entriegeln und Einstellen des Beschlags 100 wird durch Drehen der Antriebswelle 30 um die Achse A der Mitnehmer 190 gedreht. Der Mitnehmer 190 dreht zunächst nur das Steuermittel 180, wodurch die Steuerkulissen 184 die Lagerzapfen 156 entgegen der Kraft der Kraftspeicher 182 nach radial innen ziehen, wodurch die Sperrplanetenräder 150 in den nicht verriegelnden Zahneingriff überführt werden und somit der Beschlag 100 entriegelt ist. Nach Durchlaufen des Spiels zwischen dem Mitnehmerprofil 192 und der Aufnahmeöffnung 168 des Planetenträgers 160 dreht der Mitnehmer 190 auch den Planetenträger 160, wodurch eine Relativdrehung zwischen dem ersten Hohlrad 112 und dem zweiten Hohlrad 122 und somit zwischen dem ersten Beschlagteil 110 und dem zweiten Beschlagteil 120 erfolgt.

Zum Beenden des Einstellens und erneutem Verriegeln des Beschlags 100 wird die Drehung der Antriebswelle 30 und somit des Mitnehmers 190 beendet. Die Kraftspeicher 182 drücken die Sperrplanetenräder 150 nach radial außen. Die Lagerzapfen 156 drücken dabei derart auf die Steuerkulissen 184 des Steuermittels 180, dass das Steuermittel 180 soweit zurückschwenkt, bis die Lagerzapfen 156 innerhalb der Steuerkulissen 184 nach radial außen bewegt werden und die Sperrplanetenräder 150 in den verriegelnden Zustand überführt sind. Alternativ erfolgt das Zurückschwenken des Steuermittels 180 über die Antriebswelle 30, beispielsweise indem die Antriebswelle 30 über eine Steuerung eines Elektromotors entsprechend zurückgedreht wird.

Die Figuren 9 und 10 zeigen eine Verzahnung 253 eines ersten Zahnrads 252 eines Sperrplanetenrads 250 und eine Hohlradverzahnung 214 eines ersten Beschlagteils 210 einer Abwandlung des Ausführungsbeispiels. Die übrigen Bauteile entsprechen dem zuvor beschriebenen Ausführungsbeispiel. Figur 9 zeigt ausschnittsweise die Verzahnung 253 in einem nicht verriegelnden Zahneingriff mit der Hohlradverzahnung 214. Figur 10 zeigt ausschnittsweise die Verzahnung 253 in einem verriegelnden Zahneingriff (Sperrzustand) mit der Hohlradverzahnung 214.

Durch eine spezielle Zahnspitzengeometrie der Verzahnung 253 wird eine Selbsthemmung bzw. Blockierung der Sperrplanetenräder 250 im verriegelnden Zustand erreicht, wobei im verriegelnden Zustand (nach "Einfall" der Verzahnung 253 in die Hohlradverzahnung 214) die Zahnflanken im Bereich der Kontaktstellen zwischen der Verzahnung 253 und der Hohlradverzahnung 214 einen Nullgrad-Winkel zur radialen Richtung (Bewegungsrichtung) haben und deshalb keine austreibende Kraft erfahren. Auf ein Sperren des verriegelnden Zustands, beispielsweise mittels einer Steuerkulisse und/oder eines Exzentermittels, kann daher verzichtet werden.

Die in der vorstehenden Beschreibung, den Ansprüchen und den Figuren offenbarten Merkmale können sowohl einzeln als auch in Kombination für die Verwirklichung der Erfindung in ihren verschiedenen Ausgestaltungen von Bedeutung sein, soweit sie im Schutzbereich der Ansprüche bleiben.

### Bezugszeichenliste

- 1: Fahrzeugsitz
- 10: Sitzteil
- 20: Rückenlehne
- 30: Antriebswelle
- 100: Beschlag
- 110; 210: erstes Beschlagteil
- 112: erstes Hohlrad
- 114; 214: erste Hohlradverzahnung
- 120: zweites Beschlagteil
- 122: zweites Hohlrad
- 124: zweite Hohlradverzahnung
- 130: Umklammerungsring
- 140: Planetenrad
- 142: Planetenrad-Verzahnung
- 150; 250: Sperrplanetenrad
- 152; 252: erstes Zahnrad
- 153; 253: Verzahnung des ersten Zahnrads
- 154: zweites Zahnrad
- 155: Verzahnung des zweiten Zahnrads
- 156: Lagerzapfen
- 160: Planetenträger
- 162: Öffnung
- 164: Planetenträgerflansch
- 166: Langloch
- 168: Aufnahmeöffnung
- 170: Lagerbolzen
- 172: Lagerbuchse
- 174: Aufnahmebereich
- 176: Zapfen
- 180: Steuermittel, Kulissenscheibe
- 182: Kraftspeicher
- 184: Steuerkulisse
- 190: Mitnehmer
- 192: Mitnehmerprofil
- 194: Mitnehmernocken
- A: Drehachse
- D1: Planetenrad-Drehachse
- D2: Sperrplanetenrad-Drehachse
- K: Kontaktstelle
- s1: Abstand (zwischen D1 und A)
- s2: Abstand (zwischen D2 und A)

## Patentansprüche

1. Beschlag (100) für einen Fahrzeugsitz (1), aufweisend ein erstes Hohlrad (112) mit einer ersten Hohlradverzahnung (114; 214), ein relativ zu dem ersten Hohlrad (112) um eine Achse (A) drehbar gelagertes zweites Hohlrad (122) mit einer zweiten Hohlradverzahnung (124) und wenigstens ein auf einem Planetenträger (160) exzentrisch zur Achse (A) drehbar gelagertes Planetenrad (140), welches mit der ersten Hohlradverzahnung (114; 214) und der zweiten Hohlradverzahnung (124) in Zahneingriff ist, wobei durch Drehung des Planetenträgers (160) um die Achse (A) das wenigstens eine Planetenrad (140) in der ersten Hohlradverzahnung (114; 214) und in der zweiten Hohlradverzahnung (124) abwälzbar ist, wodurch das erstes Hohlrad (112) und das zweite Hohlrad (122) relativ zueinander um die Achse (A) drehbar sind,
**dadurch gekennzeichnet, dass**
wenigstens ein um eine Sperrplanetenrad-Drehachse (D2) drehbares Sperrplanetenrad (150; 250) mit der ersten Hohlradverzahnung (114; 214) und mit der zweiten Hohlradverzahnung (124) in einem dauerhaften Zahneingriff ist, und ein Abstand (s2) zwischen der Sperrplanetenrad-Drehachse (D2) und der Achse (A) derart veränderbar ist, dass das wenigstens eine Sperrplanetenrad (150; 250) wahlweise zwischen einem verriegelnden Zahneingriff und einem nicht verriegelnden Zahneingriff mit der ersten Hohlradverzahnung (114; 214) und/oder der zweiten Hohlradverzahnung (124) überführbar ist.

2. Beschlag (100) nach Anspruch 1, **dadurch gekennzeichnet, dass** der Beschlag (100) genau drei Planetenräder (140) aufweist.

3. Beschlag (100) nach Anspruch 1 oder 2, **dadurch gekennzeichnet, dass** der Beschlag (100) genau drei Sperrplanetenräder (150; 250) aufweist.

4. Beschlag (100) nach einem der vorhergehenden Ansprüche, **dadurch gekennzeichnet, dass** das wenigstens eine Sperrplanetenrad (150; 250) ein erstes Zahnrad (152; 252) und ein zweites Zahnrad (154) aufweist, wobei das erste Zahnrad (152; 252) und das zweite Zahnrad (154) axial nebeneinander angeordnet und drehfest miteinander verbunden sind, und das erste Zahnrad (152; 252) mit der ersten Hohlradverzahnung (114; 214) und das zweite Zahnrad (154) mit der zweiten Hohlradverzahnung (124) in einem dauerhaften Zahneingriff sind.

5. Beschlag (100) nach einem der vorhergehenden Ansprüche, **dadurch gekennzeichnet, dass** eine Zähnezahldifferenz zwischen einer Zähnezahl der ersten Hohlradverzahnung (114; 214) und einer Zähnezahl der zweiten Hohlradverzahnung (124) der Anzahl der Planetenräder (140) oder einem Vielfachen davon entspricht.

6. Beschlag (100) nach einem der Ansprüche 1 bis 3, **dadurch gekennzeichnet, dass** das Sperrplanetenrad einstückig ausgeführt ist.

7. Beschlag (100) nach Anspruch 6, **dadurch gekennzeichnet, dass** das Sperrplanetenrad genau eine axial durchgehende Verzahnung aufweist, die mit der ersten Hohlradverzahnung und mit der zweiten Hohlradverzahnung in einem dauerhaften Zahneingriff ist.

8. Beschlag (100) nach einem der vorhergehenden Ansprüche, **dadurch gekennzeichnet, dass** das wenigstens eine Sperrplanetenrad (150; 250) mittels eines Steuermittels (180) entgegen der Kraft eines Kraftspeichers (182) aus dem verriegelnden Zahneingriff in den nicht verriegelnden Zahneingriff bewegbar ist.

9. Beschlag (100) nach Anspruch 8, **dadurch gekennzeichnet, dass** ein drehbar gelagerter Mitnehmer (190) derart mit dem Steuermittel (180) und dem Planetenträger (160) zusammenwirkt, dass eine Drehung des Mitnehmers (190) aus einer Mittellage heraus zunächst eine Drehung des Steuermittels (180) und daraus resultierend eine Überführung des wenigstens einen Sperrplanetenrads (150; 250) in den nicht verriegelnden Zahneingriff bewirkt, und anschließend bei weiterer Drehung des Mitnehmers (190) eine Drehung des Planetenträgers (160) bewirkt.

10. Beschlag (100) nach einem der vorhergehenden Ansprüche, **dadurch gekennzeichnet, dass** im verriegelnden Zahneingriff des wenigstens einen Sperrplanetenrads (150; 250) eine Verzahnung (153, 155; 253) des wenigstens einen Sperrplanetenrads (150; 250) an wenigstens zwei Kontaktstellen (K), vorzugsweise an mehr als zwei Kontaktstellen (K), mit der ersten Hohlradverzahnung (114; 214) und/oder an wenigstens zwei Kontaktstellen (K), vorzugsweise an mehr als zwei Kontaktstellen (K), mit der zweiten Hohlradverzahnung (124) im Kontakt ist, und durch Verkleinerung des Abstand (s2) zwischen der Sperrplanetenrad-Drehachse (D2) und der Achse (A) die Anzahl der Kontaktstellen (K) reduzierbar ist.

11. Beschlag (100) nach Anspruch 10, **dadurch gekennzeichnet, dass** durch Überführung des wenigstens einen Sperrplanetenrads (150; 250) in den nicht verriegelnden Zahneingriff die Anzahl der Kontaktstellen (K) reduzierbar ist.

12. Beschlag (100) nach einem der vorhergehenden Ansprüche, **dadurch gekennzeichnet, dass** die Zahnflanken der Verzahnungen (213) des wenigstens einen Sperrplanetenrads (250) derart ausgelegt sind, das im verriegelnden Zahneingriff des wenigstens einen Sperrplanetenrads (250) weder die erste Hohlradverzahnung (214) noch die zweite Hohlradverzahnung eine Kraftkomponente in Richtung der Achse (A) auf das Sperrplanetenrad (250) ausübt.

13. Beschlag (100) für einen Fahrzeugsitz (1) nach einem der vorhergehenden Ansprüche, **dadurch gekennzeichnet, dass** der Beschlag (100) ein Lehneneinsteller ist.

14. Fahrzeugsitz (1) mit einem mit einem Sitzteil (10), einer Rückenlehne (20) und wenigstens einem Beschlag (100) nach einem der Ansprüche 1 bis 13.

15. Fahrzeugsitz (1) nach Anspruch 14, **dadurch gekennzeichnet, dass** der Beschlag (100) zur Einstellung eines Neigungswinkels zwischen dem Sitzteil (10) und der Rückenlehne (20) dient.

## Claims

1. Fitting (100) for a vehicle seat (1), having a first ring gear (112) having a first ring gear toothing (114; 214), a second ring gear (122) which has a second ring gear toothing (124) and is mounted so as to be rotatable relative to the first ring gear (112) about an axis (A), and at least one planet gear (140) which is mounted on a planet carrier (160) so as to be rotatable eccentrically to the axis (A) and meshes with the first ring gear toothing (114; 214) and the second ring gear toothing (124), wherein by rotating the planet carrier (160) about the axis (A) the at least one planet gear (140) is rollable in the first ring gear toothing (114; 214) and in the second ring gear toothing (124), as a result of which the first ring gear (112) and the second ring gear (122) are rotatable relative to one another about the axis (A), **characterized in that** at least one interlocking planet gear (150; 250) which is rotatable about an interlocking planet gear rotation axis (D2) permanently meshes with the first ring gear toothing (114; 214) and permanently meshes with the second ring gear toothing (124), and a spacing (s2) between the interlocking planet gear rotation axis (D2) and the axis (A) is variable in such a manner that the at least one interlocking planet gear (150; 250) is selectively transferable between a locking gear mesh and a non-locking gear mesh with the first ring gear toothing (114; 214) and/or the second ring gear toothing (124).

2. Fitting (100) according to Claim 1, **characterized in that** the fitting (100) has exactly three planet gears (140).

3. Fitting (100) according to Claim 1 or 2, **characterized in that** the fitting (100) has exactly three interlocking planet gears (150; 250).

4. Fitting (100) according to one of the preceding claims, **characterized in that** the at least one interlocking planet gear (150; 250) has a first gear wheel (152; 252) and a second gear wheel (154), wherein the first gear wheel (152; 252) and the second gear wheel (154) are disposed so as to be axially next to one another and are connected to one another in a rotationally fixed manner, and the first gear wheel (152; 252) permanently meshes with the first ring gear toothing (114; 214) and the second gear wheel (154) permanently meshes with the second ring gear toothing (124).

5. Fitting (100) according to one of the preceding claims, **characterized in that** a tooth count difference between a tooth count of the first ring gear toothing (114; 214) and a tooth count of the second ring gear toothing (124) corresponds to the number of planet gears (140) or a multiple thereof.

6. Fitting (100) according to one of Claims 1 to 3, **characterized in that** the interlocking planet gear is integrally embodied.

7. Fitting (100) according to Claim 6, **characterized in that** the interlocking planet gear has exactly one axially continuous toothing which permanently meshes with the first ring gear toothing and with the second ring gear toothing.

8. Fitting (100) according to one of the preceding claims, **characterized in that** the at least one interlocking planet gear (150; 250) by means of a control means (180) is movable, counter to the force of an energy storage unit (182), from the locking gear mesh to the non-locking gear mesh.

9. Fitting (100) according to Claim 8, **characterized in that** a rotatably mounted driver (190) interacts with the control means (180) and the planet carrier (160) in such a manner that a rotation of the driver (190) from a central position initially causes a rotation of the control means (180) and, as a result, the at least one interlocking planet gear (150; 250) to be transferred to the non-locking gear mesh and subsequently, upon further rotation of the driver (190), causes a rotation of the planet carrier (160).

10. Fitting (100) according to one of the preceding claims, **characterized in that**, in the locking gear mesh of the at least one interlocking planet gear (150; 250), a toothing (153, 155; 253) of the at least one interlocking planet gear (150; 250) contacts the first ring gear toothing (114; 214) at at least two contact points (K), preferably at more than two contact points (K), and/or contacts the second ring gear toothing (124) at at least two contact points (K), preferably at more than two contact points (K), and the number of contact points (K) is reducible by decreasing the spacing (s2) between the interlocking planet gear rotation axis (D2) and the axis (A).

11. Fitting (100) according to Claim 10, **characterized in that** the number of contact points (K) is reducible by transferring the at least one interlocking planet gear (150; 250) to the non-locking gear mesh.

12. Fitting (100) according to one of the preceding claims, **characterized in that** the tooth flanks of the toothings (213) of the at least one interlocking planet gear (250) are conceived in such a manner that, in the locking gear mesh of the at least one interlocking planet gear (250), neither the first ring gear toothing (214) nor the second ring gear toothing exerts on the interlocking planet gear (250) a force component in the direction of the axis (A) .

13. Fitting (100) for a vehicle seat (1) according to one of the preceding claims, **characterized in that** the fitting (100) is a backrest adjuster.

14. Vehicle seat (1) having a seat part (10), a backrest (20) and at least one fitting (100) according to one of Claims 1 to 13.

15. Vehicle seat (1) according to Claim 14, **characterized in that** the fitting (100) serves for adjusting an inclination angle between the seat part (10) and the backrest (20).

## Revendications

1. Ferrure (100) pour un siège de véhicule (1), présentant une première couronne (112) dotée d'une première denture de couronne (114 ; 214), une deuxième couronne (122) montée rotative autour d'un axe (A) par rapport à la première couronne (112) et dotée d'une deuxième denture de couronne (124) et au moins une roue satellite (140) montée rotative de manière excentrique par rapport à l'axe (A) sur un porte-satellites (160), laquelle roue satellite est en engrènement avec la première denture de couronne (114 ; 214) et la deuxième denture de couronne (124), l'au moins une roue satellite (140) pouvant rouler dans la première denture de couronne (114 ; 214) et dans la deuxième denture de couronne (124) par rotation du porte-satellites (160) autour de l'axe (A), de sorte que la première couronne (112) et la deuxième couronne (122) soient rotatives l'une par rapport à l'autre autour de l'axe (A),
**caractérisée en ce**
**qu'**au moins une roue satellite de blocage (150 ; 250) rotative autour d'un axe de rotation de roue satellite de blocage (D2) est en engrènement permanent avec la première denture de couronne (114 ; 214) et avec la deuxième denture de couronne (124), et une distance (s2) entre l'axe de rotation de roue satellite de blocage (D2) et l'axe (A) peut être modifiée de telle sorte que l'au moins une roue satellite de blocage (150 ; 250) puisse être transférée sélectivement entre un engrènement bloquant et un engrènement non bloquant avec la première denture de couronne (114 ; 214) et/ou la deuxième denture de couronne (124).

2. Ferrure (100) selon la revendication 1, **caractérisée en ce que** la ferrure (100) présente exactement trois roues satellites (140).

3. Ferrure (100) selon la revendication 1 ou 2, **caractérisée en ce que** la ferrure (100) présente exactement trois roues satellites de blocage (150 ; 250).

4. Ferrure (100) selon l'une des revendications précédentes, **caractérisée en ce que** l'au moins une roue satellite de blocage (150 ; 250) présente une première roue dentée (152 ; 252) et une deuxième roue dentée (154), la première roue dentée (152 ; 252) et la deuxième roue dentée (154) étant disposées axialement à côté l'une de l'autre et reliées l'une à l'autre de manière solidaire en rotation, et la première roue dentée (152 ; 252) étant en engrènement permanent avec la première denture de couronne (114 ; 214) et la deuxième roue dentée (154) étant en engrènement permanent avec la deuxième denture de couronne (124).

5. Ferrure (100) selon l'une des revendications précédentes, **caractérisée en ce qu'**une différence de nombres de dents entre un nombre de dents de la première denture de couronne (114 ; 214) et un nombre de dents de la deuxième denture de couronne (124) correspond au nombre de roues satellites (140) ou à un multiple de celui-ci.

6. Ferrure (100) selon l'une des revendications 1 à 3, **caractérisée en ce que** la roue satellite de blocage est réalisée d'une seule pièce.

7. Ferrure (100) selon la revendication 6, **caractérisée en ce que** la roue satellite de blocage présente exactement une denture axialement continue qui est en engrènement permanent avec la première denture de couronne et avec la deuxième denture de couronne.

8. Ferrure (100) selon l'une des revendications précédentes, **caractérisée en ce que** l'au moins une roue satellite de blocage (150 ; 250) est déplaçable au moyen d'un moyen de commande (180), à l'encontre de la force d'un accumulateur de force (182), de l'engrènement bloquant à l'engrènement non bloquant.

9. Ferrure (100) selon la revendication 8, **caractérisée en ce qu'**un élément d'entraînement (190) monté rotatif coopère avec le moyen de commande (180) et le porte-satellites (160) de telle sorte qu'une rotation de l'élément d'entraînement (190) à partir d'une position centrale provoque tout d'abord une rotation du moyen de commande (180) et, en conséquence, un transfert de l'au moins une roue satellite de blocage (150 ; 250) dans l'engrènement non bloquant, et provoque ensuite, lors de la rotation supplémentaire de l'élément d'entraînement (190), une rotation du porte-satellites (160).

10. Ferrure (100) selon l'une des revendications précédentes, **caractérisée en ce que**, dans l'engrènement bloquant de l'au moins une roue satellite de blocage (150 ; 250), une denture (153, 155 ; 253) de l'au moins une roue satellite de blocage (150 ; 250) est en contact avec la première denture de couronne (114 ; 214) en au moins deux points de contact (K), de préférence en plus de deux points de contact (K), et/ou est en contact avec la deuxième denture de couronne (124) en au moins deux points de contact (K), de préférence en plus de deux points de contact (K), et le nombre de points de contact (K) peut être réduit par diminution de la distance (s2) entre l'axe de rotation de roue satellite de blocage (D2) et l'axe (A).

11. Ferrure (100) selon la revendication 10, **caractérisée en ce que** le nombre de points de contact (K) peut être réduit par transfert de l'au moins une roue satellite de blocage (150 ; 250) dans l'engrènement non bloquant.

12. Ferrure (100) selon l'une des revendications précédentes, **caractérisée en ce que** les flancs de dent des dentures (213) de l'au moins une roue satellite de blocage (250) sont configurés de telle sorte que, dans l'engrènement bloquant de l'au moins une roue satellite de blocage (250), ni la première denture de couronne (214) ni la deuxième denture de couronne n'exerce sur la roue satellite de blocage (250) une composante de force en direction de l'axe (A).

13. Ferrure (100) pour un siège de véhicule (1) selon l'une des revendications précédentes, **caractérisée en ce que** la ferrure (100) est un dispositif de réglage de dossier.

14. Siège de véhicule (1) comprenant une partie d'assise (10), un dossier (20) et au moins une ferrure (100) selon l'une des revendications 1 à 13.

15. Siège de véhicule (1) selon la revendication 14, **caractérisé en ce que** la ferrure (100) sert au réglage d'un angle d'inclinaison entre la partie d'assise (10) et le dossier (20).
